# EUROPEAN PATENT APPLICATION

(11) **EP 2 083 536 A1**
(43) Date of publication of application: **29.07.2009**
(21) Application number: 08425035.6
(22) Date of filing: 25.01.2008
(51) Int. Cl.: H04L 12/24, H04L 12/12

(54) **Method for managing a telecommunication network**

(71) Applicant: Alcatel Lucent, 75008 Paris (FR)
(72) Inventor: Donadio, Pasquale, 80129 Napoli (IT); Paparella, Andrea, 21052 Busto Arsizio (IT); Riglietti, Roberto, 20059 Vimercate (IT)
(74) Representative: Colombo, Stefano Paolo

(57) **Abstract**

It is disclosed a method for managing a telecommunication network which comprises a plurality of network elements and which is suitable to cooperate with a management terminal. The method comprises the following steps, which are performed at a first network element: a) storing a cell comprising a software code portion suitable for performing, when executed, at least part of a management operation; b) receiving a request message comprising a request of performing the management operation; c) determining whether to activate the cell according to information comprised in the request message; d) in the affirmative, activating the cell, thus executing the above part of management operation; and e) upon expiration of a lifetime tmax of the cell, deactivating the cell.

## Description

### Field of the invention

The present invention relates to the field of telecommunication networks. In particular, the present invention relates to a method for managing a telecommunication network. Further, the present invention relates to a network element configured to implement such a method and a telecommunication network comprising such a network element.

### Background art

As it is known, managing a telecommunication network requires to perform various operations (which will be termed herein after "management operations"), such as for instance:
- monitoring performances of the network;
- configuring the network elements and their resources (ports, boards, cross-connections, etc.);
- updating the software applications stored at the network elements; and
- managing possible failures occurring in the network.

Typically, the management operations are performed by means of a "network management system" or, briefly, NMS. The NMS is a computer connected to the telecommunication network, which stores and executes a set of management software programs (which will be termed herein after "management applications"), each being suitable for performing a given management operation. Further, the NMS is equipped with a "manager", i.e. a software component allowing it to communicate with all the network elements of the telecommunication network, in order to give instructions to and/or exchanging data with the network elements. Besides, each network element has a respective "agent", i.e. a software component suitable for interacting with the NMS manager. This allows the network element to interpret the instructions given by the NMS and to execute such instructions.

The above described management mechanism is therefore based on a clean distinction between the NMS, acting as the "managing entity", and the network elements, acting as "managed entities".

The European patent application number 07425039.0, filed on August 30, 2007 in the name of the same Applicant, discloses a telecommunication network connected to an NMS, wherein the network elements and the NMS form a calculation grid. The calculation grid allows to share the management applications between the network elements and the NMS, so that each management application may be executed not only by the NMS, but also by any network element.

This allows to overcome the above distinction between NMS, which is responsible of performing the management operations, and managed network elements. Indeed, both the NMS and the network elements may perform at least part of a management operation by executing at least part of a management application. This is particularly advantageous in that it allows to decentralize the execution of the management operations, by using computational resources (i.e. CPU and memory) also of the network elements.

Further, according to the European patent application number 07425039.0, the telecommunication network may be not connected to any NMS. In this case, the network elements of the telecommunication network form a calculation grid which does not comprise any NMS. A management terminal suitable for executing a browser is connected to one of the network elements.

Accordingly, in this case, there is not any NMS separated from the network elements since, thanks to the calculation grid, the network elements are able to access the management applications and to execute them. In other words, the telecommunication network is responsible for performing the management operations for managing itself, while the management terminal has the only task of executing the browser and rendering to the user the results of the performed management operations.

### Summary of the invention

The Applicant has noticed that, according to the management method disclosed by the European patent application number 07425039.0, the management applications always have to be active at the network elements during the operation of the telecommunication network. In particular, such management applications always have to be in a stand-by state, during which they wait for possible events triggering their execution.

Exemplary events which may trigger the execution of a management application are the detection in the telecommunication network of a request (e.g. a performance monitoring request, a path configuration request, etc.) from an operator responsible of managing the network, as well as an alarm message generated by one of the network elements.

The need of always keeping active the management applications at the network elements disadvantageously implies the need to permanently allocate a part of the computational resources of the network elements (i.e. CPU and memory) to the execution of such applications, even when they are in stand-by, i.e. when they are not actually run.

Accordingly, a situation may occur in which a certain management application which is particularly complex engages a very high amount of computational resources of a given network element, but it is in stand-by for most of the lifetime of the network element, since the event suitable to trigger its execution is very unusual.

This means that the computational resources of the network element are not used in an optimal way, because they are permanently allocated to the management applications, while being actually used for running such applications only when an event occurs inducing them to pass from stand-by to execution.

Accordingly, the Applicant has faced the problem of providing a method for managing a telecommunication network which overcomes the aforesaid problem, i.e. which allows to avoid permanent allocation of computational resources to the execution of the management applications, thus allowing a more efficient use of the computational resources of each network element.

According to a first aspect, the present invention provides a method for managing a telecommunication network comprising a plurality of network elements and cooperating with a management terminal. The method comprises the following steps, which are performed by a first network element of the plurality of network elements:
a) storing a cell comprising a software code portion suitable for performing, when executed by any of the plurality of network elements, at least part of a management operation;
b) receiving a request message comprising a request of performing the management operation;
c) determining whether to activate the cell according to information comprised in the request message;
d) in the affirmative, activating the cell, thus executing the part of the management operation; and
e) upon expiration of a lifetime tmax of the cell, deactivating the cell.

Preferably, the method further comprises, before step a), a step of defining the lifetime tmax as one of:
- a maximum time between an activation time of the cell and a deactivation time of the cell; and
- an instant wherein an event suitable for triggering the deactivation of the cell occurs.

Preferably, the method further comprises, before step a), a step of connecting the plurality of network elements by means of a calculation grid.

Preferably, step a) further comprises:
- detecting the availability of a further cell at a second network element of the plurality of network elements, the further cell comprising a further software code portion suitable for performing, when executed by any of the plurality of network elements, at least a further part of the management operation; and
- storing at the first network element a cell reference allowing the first network element to retrieve the further cell from the second network element.

Profitably, the method further comprises the following steps, which are performed after step b):
- processing the request message for generating at least one further request message; and
- transmitting the at least one further request message to a further network element of the plurality of network elements.

Preferably, step d) comprises:
- creating a copy of the cell; and
- setting the copy in an initial state S0, the initial state S0 being selected between an execution state, wherein the copy is active and is executed by computational resources of the first network element, and a wait state, wherein the copy is active and waiting to enter in the execution state.

Preferably, step e) comprises a step of keeping the cell inactive until the first network element is switched off.

According to a second aspect, the present invention provides a network element for a telecommunication network, the telecommunication network cooperating with a management terminal, the network element being configured to perform the method as set forth above.

According to a third aspect, the present invention provides a telecommunication network suitable for cooperating with a management terminal, the telecommunication network comprising at least one network element as set forth above.

According to a fourth aspect, the present invention provides a computer program comprising a software code portion, the computer program being suitable for being stored at a network element of a telecommunication network, the telecommunication network being configured to cooperate with a management terminal, the computer program being suitable for, when run at the network element, executing the method as set forth above.

### Brief description of the drawings

The present invention will become clearer by reading the following detailed description, given by way of example and not of limitation, to be read with reference to the accompanying drawings, wherein:
- Figure 1 schematically shows an exemplary telecommunication system;
- Figure 2 shows in detail the structure of a network element of the system of Figure 1, according to a first embodiment of the present invention;
- Figure 3 is a flow chart showing the operation of activating cells in the system of Figure 1, according to the first embodiment of the present invention;
- Figure 4 is a flow chart showing the operation of executing and deactivating cells in the system of Figure 1;
- Figure 5 shows in detail the structure of a network element of the system of Figure 1, according to a second embodiment of the present invention; and
- Figure 6 is a flow chart showing the operation of activating cells in the system of Figure 1, according to the second embodiment of the present invention.

### Detailed description of preferred embodiments of the invention

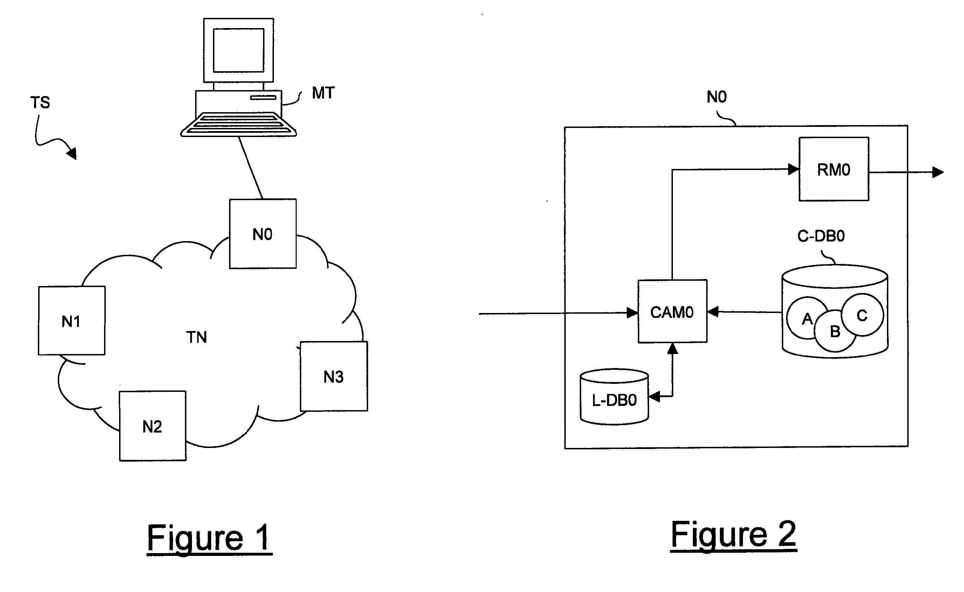

Figure 1 schematically shows an exemplary telecommunication system TS comprising a telecommunication network TN and a management terminal MT cooperating with the telecommunication network TN.

The telecommunication network TN may comprise a packet-switched network (such as e.g. an Ethernet network, an ATM network, etc.) and/or a circuit-switched network (such as a TDM network of the type SDH, SONET, etc.). The telecommunication network TN comprises a plurality of network elements. For simplicity, Figure 1 only shows four network elements N0, N1, N2 and N3. Each network element N0, N1, N2 and N3 may be based on a single transmission technology (i.e., it may be an Ethernet switch, an IP router, an SDH node, etc.), or it may comprise different sub-systems, each sub-system being based on a different transmission technology.

Preferably, the network elements N0, N1, N2 and N3 are part of a same calculation grid, and they communicate via web by means of an application which is termed "middleware". For instance, the network elements N0, N1, N2 and N3 may be part of a calculation grid of the type proposed by the Globus Alliance, which uses the middleware Globus. Preferably, in this case, the communication among the network elements N0, N1, N2 and N3 occurs in the form of web services.

The management terminal MT is a computer connected to one of the network elements of the telecommunication network TN. By way of example, Figure 1 shows that the management terminal MT is connected to the network element N0.

Preferably, the management terminal MT is provided with a browser not shown in Figure 1, which allows an operator to visualize on the display of the management terminal MT a graphic representation of the resources of the telecommunication network TN. Advantageously, by means of the terminal MT an operator responsible of managing the telecommunication network TN may monitor the status of the telecommunication network TN (for instance, traffic on the various links, performance of the network elements, etc.), instruct the telecommunication network TN to perform a given management operation, check the outcome of a management operation, etc.

By referring to Figure 2, the structure of the network elements N0, N1, N2 and N3 according to a first embodiment of the present invention will be now described in detail. Since it is assumed that the structure of the four network elements N0, N1, N2 and N3 is the same, Figure 2 only shows the structure of the network element N0.

The network element N0 preferably comprises a cell activation module CAM0, a cell database C-DB0, a request module RM0 and a local database L-DB0.

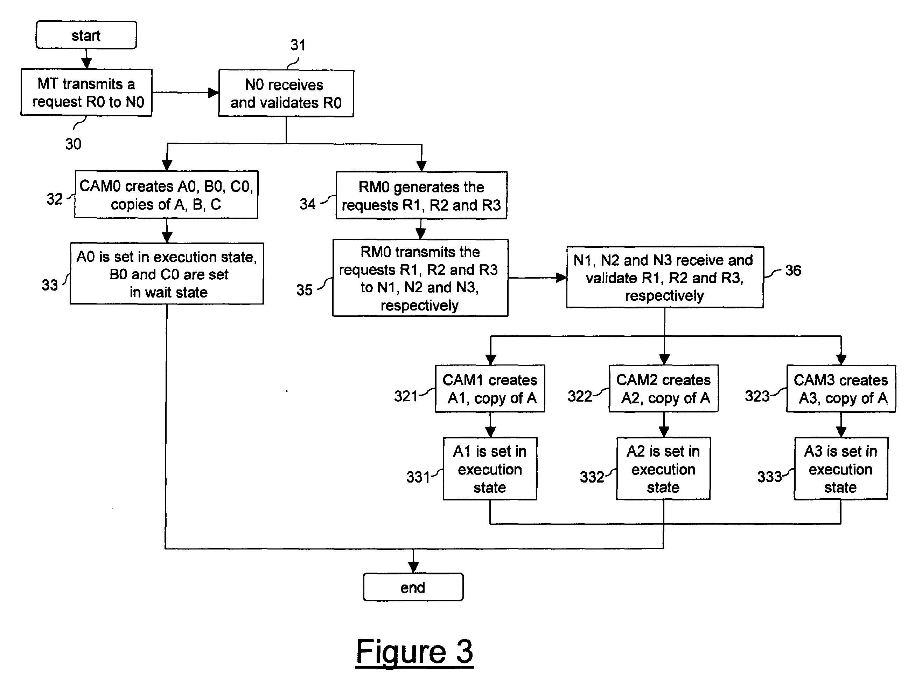

In the following description and in the claims, the term "cell" will designate a software code portion for which the following features may be defined:
- at least one action Ac which the cell is suitable to perform when it is run, and which is part of a management operation;
- at least one input parameter X which the cell is suitable to receive;
- at least one output parameter Y which the cell is suitable to output;
- a set of states S in which the cell may be set. Preferably, the set of states S comprises an active state and a inactive state. Preferably, the transition of the cell from any state to the inactive state is irreversible, i.e. when a cell enters its inactive state, it indefinitely remains in such a state until the network element N0 is switched off. The active state may in turn comprises an execution state, in which the cell is active and is executed by the CPU of the network element N0, and a wait state, in which the cell is active but is waiting to be executed by the CPU of the network element N0. Optionally, one of the states of the set of states S may be designated as initial state S0, i.e. as the state in which the cell is set by default when activated by the cell activation module CAM0, as it will be described in further detail herein after by referring to Figure 3; and
- a lifetime tmax, i.e. the maximum time which may pass between the time in which the cell is activated and the time in which the cell enters its inactive state. The lifetime tmax may be defined by the operator both in terms of time units (i.e. seconds, minutes, hours, days, etc.) or by defining an event that, when received by the cell, causes the cell to enter its inactive state.

By way of example, Figure 2 shows that the cell database C-DB0 of the network element N0 stores three cells A, B and C.

For instance, the cell A preferably has the following features:
- action Ac: retrieving, at a network element of a given type, performance data relating to a given type of resources from the local database of such a network element;
- input parameters X: resource type upon which the retrieval of performance data has to be performed and duration of the retrieval operation;
- output parameters Y: retrieved performance data;
- set of states S: execution state (designated as initial state S0) and inactive state; and
- lifetime tmax: duration of the retrieval operation set by the operator.

Always by way of example, the cell B preferably has the following features:
- actions Ac: collecting data provided by different network elements (for, instance, performance data locally retrieved by each network element), synthesize them for eliminating possible redundancies and arrange them in a single data structure, such as for instance a table;
- input parameters X: data provided by each network element;
- output parameter Y: data structure;
- set of states S: execution state, wait state (designated as the initial state S0) and inactive state; and
- lifetime tmax: instant at which the data structure is generated.

Always by way of example, the cell C preferably has the following features:
- action Ac: displaying data (for instance, the above mentioned data structure) on the display of the management terminal MT;
- input parameters X: data to be displayed;
- output parameters Y: information allowing the management terminal MT to display the data;
- set of states S: execution state, wait state (designated as the initial state S0) and inactive state; and
- lifetime tmax: instant at which the data are displayed at the management terminal MT and the operator transmits a message confirming that he does not wish to perform any other management operation.

The cell database C-DB0 of the network element N0 may further store other cells, which are not shown in Figure 2 for simplicity.

Preferably, the cells A, B and C are written in a language independent of the software supported by the network elements of the telecommunication network TN. For instance, the cells A, B and C may be written in XML (Extensible Markup Language). This advantageously allows the cells A, B and C to be run on anyone of the network elements of the telecommunication network TN, independently of the software they support.

Besides the components shown in Figure 2, the network element N0 may comprise other components, which are not shown in Figure 2 since they are not relevant to the present description.

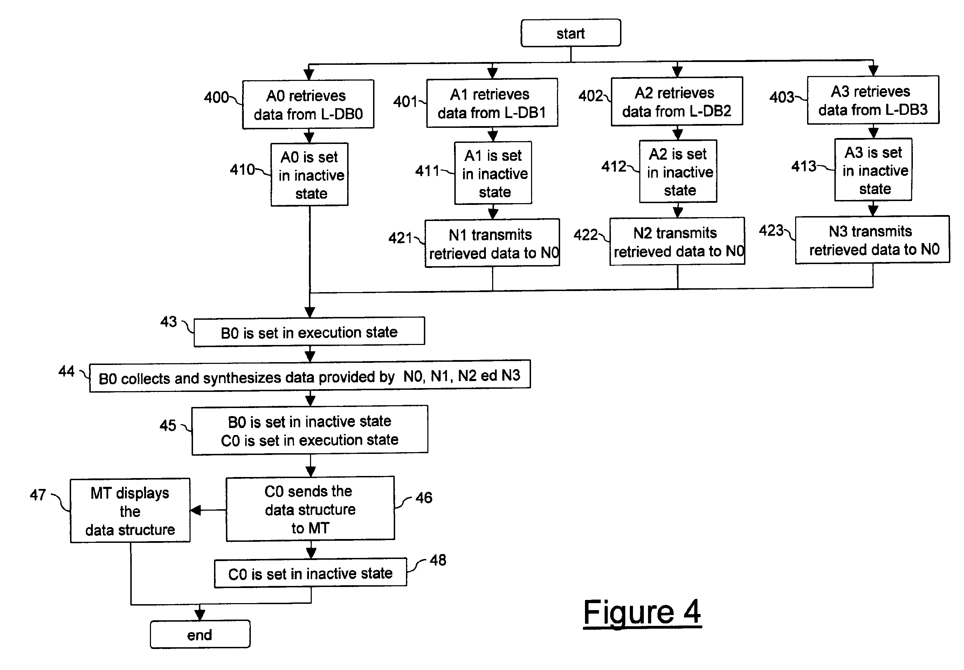

The operation of the network element N0 and its components shown in Figure 2 will be now described in further detail by referring to the flow charts of Figures 3 and 4.

As mentioned above, it is assumed that the structure of the network elements N1, N2 and N3 is the same as the structure of the network element N0 shown in Figure 2. Therefore, the network element N1 (N2, N3) has a cell activation module CAM1 (CAM2, CAM3), a cell database C-DB1 (C-DB2, C-DB3), a response module RM1 (RM2, RM3) and a local database L-DB1 (L-DB2, L-DB3). Further, it is assumed that each of the cell databases C-DB1, C-DB2, C-DB3 comprises at least the above described cells A, B and C. Further, it is assumed that each network element N0, N1, N2 and N3 has the same processing capacity and the logic suitable for processing the cells A, B and C.

By referring to Figure 3, it is assumed that an operator responsible for managing the telecommunication network TN wishes to monitor the performance of a particular type of resources (such as, for instance, the Ethernet ports of the edge network elements of the telecommunication network TN) by visualizing performance data relative to such resources on the display of management terminal MT. It is assumed that, in the telecommunication network TN, only the network elements N0, N1, N2 and N3 are edge network elements equipped with Ethernet ports.

During a first step 30, the operator generates a request message R0 by means of the management terminal MT. The request message R0 preferably comprises at least part of the following information:
- a request identifier;
- an identifier of the request type (i.e. a request of performance monitoring);
- an identifier of the type of resources concerned by the request message R0 (i.e. Ethernet ports of edge network elements); and
- a duration of the operation of retrieving performance data.

Always during step 30, the management terminal MT preferably transmits the request message R0 to the first network element of the telecommunication network TN which it may access, i.e. the network element N0.

During a successive step 31, the network element N0 preferably receives the request message R0 from the management terminal MT and validates it.

Then, the network element N0 performs a step 32, wherein the cell activation module CAM0, according to the information comprised in the request message R0, determines which cell(s) has to be retrieved among the cells stored in the cell database C-DB0 for fulfilling the request comprised in the request message R0, and creates one copy of each retrieved cell. In this example, since it has been assumed that the request message R0 generated by the operator by means of the management terminal MT is a performance monitoring request, during step 32 the cell activation module CAM0 determines to retrieve from the cell database C-DB0 the cell A (retrieval of performance data at a network element), the cell B (collection of data provided by different network elements) and the cell C (display of data at the management terminal MT). The cell activation module CAM0 then preferably creates a copy A0 of the cell A, a copy B0 of the cell B and a copy C0 of the cell C. In the following description, such copies of cells will be also termed simply "cells".

Further, during step 32, the cell activation module CAM0 provides at the input of the cell A0 the identifier of the type of resources concerned by the performance monitoring request (i.e. Ethernet ports of edge network elements), which is comprised in the request message R0. Optionally, the module CAM0 also sets the lifetime tmax of the cell A0 equal to the duration of the operation of retrieving performance data, which is also comprised in the request message R0.

After creation of the cells A0, B0 and C0, during a subsequent step 33 the cell activation module CAM0 preferably sets the cells A0, B0 and C0 in their respective initial states S0, i.e.: the execution state for the cell A0 and the wait state for the cells B0 and C0.

Substantially at the same time of steps 32 and 33, the request message R0 is forwarded to the request module RM0, which during step 34 preferably processes the information comprised in the request message R0 and, according to it, generates one or more further request messages addressed to the network elements concerned by the performance monitoring request (i.e. edge network elements with Ethernet ports) and logically adjacent to the network element N0. This advantageously allows to propagate the performance monitoring request to the other network elements concerned by the request. Since it has been assumed that only the network elements N0, N1, N2 and N3 are edge network elements equipped with Ethernet ports, during step 34 the request module RM0 preferably generates three further request messages R1, R2 and R3.

Preferably, each of the further request messages R1, R2, R3 comprises:
- a request identifier;
- an identifier of the request type (i.e. a request of retrieving performance data);
- an identifier of the type of resources concerned by the further request message (i.e. Ethernet ports of edges network elements); and
- the duration of the operation of retrieving performance data.

While the identifier of the type of concerned resources and the duration of the operation of retrieving performance data is substantially the same both in the request message R0 and in the further request messages R1, R2, R3, the request identifier preferably has a different value for each message (since the request identifier has to univocally identify each request message). Besides, preferably, the identifier of the request type comprised in the request message R0 is different from the identifier of the request type comprised in the further request messages R1, R2 and R3. Indeed, while the message R0 comprises the request that the operator, by means of the management terminal MT, addresses to the whole telecommunication network TN (and in particular to the network element N0, which plays the role of "supervisor" of the management operation), the further request messages R1, R2 and R3 comprise "partial" requests that the network element N0 addresses to the network elements N1, N2, N3 for retrieving from such network elements data allowing it to fulfill the request of the operator.

During a subsequent step 35, the request module RM0 transmits the further request messages R1, R2, R3 to the network elements N1, N2, N3, respectively (possibly through other network elements not shown in Figure 1).

During a subsequent step 36, each network element N1, N2, N3 receives the further request message R1, R2, R3, respectively, and validates it.

Then, by initially referring to the network element N1, it preferably performs a step 321 wherein its cell activation module CAM1, according to the information comprised in the message R1, determines which cell(s) has to be retrieved among the cells stored in the cell database C-DB1, and creates one copy of the retrieved cell(s). In this example, since it has been assumed that the message R1 transmitted by the network element N0 is a request of retrieving performance data, during step 321 the cell activation module CAM1 determines to retrieve from the cell database C-DB1 the cell A (retrieval of performance data at a network element), and it preferably creates a copy A1 of the cell A.

Further, during step 321, the cell activation module CAM1 provides at the input of the cell A1 the identifier of the type of resources concerned by the performance monitoring request (i.e. Ethernet ports of edge network elements), which is comprised in the message R1. Optionally, the module CAM1 also sets the lifetime tmax of the cell A1 equal to the duration of the operation of retrieving performance data, which is also comprised in the message R1.

After creation of the cell A1, during a subsequent step 331 the cell activation module CAM1 preferably sets the cell A1 in its initial state S0, i.e. the execution state.

Substantially at the same time of steps 321 and 331 performed by the network element N1, the network element N2 performs steps 322 and 332 which are substantially the same as the above described steps 321 and 331, and the network element N3 performs steps 323 and 333 which are also substantially the same as the above described steps 321 and 331. A detailed description of such steps will therefore not be repeated.

After completion of steps 33, 331, 332 and 333, therefore, the network elements N0 has activated the cells A0, B0 and C0 (A0 being in execution, while B0 and C0 being waiting to be executed), while each network element N1, N2 and N3 has activated a respective cell A1, A2 and A3 (all being in execution).

By referring now to Figure 4, each cell A0, A1, A2 and A3 is preferably run by the CPU of the network element N0, N1, N2 and N3, respectively (steps 400, 401, 402 and 403). Preferably, each cell A0, A1, A2 and A3 may be run as a thread or as a separated process. During each step 400, 401, 402 and 403, each cell A0, A1, A2 and A3 retrieves performance data relative to the Ethernet ports of its network element N0, N1, N2 and N3 from the local database L-DB0, L-DB1, L-DB2 and L-DB3, respectively.

Upon expiration of the lifetime tmax of the cells A0, A1, A2 and A3, such cells preferably switch from the execution state to the inactive state (steps 410, 411, 412 and 413).

Although in Figure 4 the steps 400, 401, 402 and 403 are shown as substantially contemporary, actually the cells A0, A1, A2 and A3 are likely to have different activation times. Indeed, the cell A0 is likely to be activated before the cells A1, A2 and A3, since activation of the latter cells is performed after generation, transmission and processing of the further request messages R1, R2 and R3. Such operations require a certain execution time, which substantially corresponds to the delay of the activation time of the cells A1, A2 and A3 relative to the activation time of the cell A0.

After the cells A1, A2 and A3 have switched to their inactive state, each network element N1, N2 and N3 preferably provides the performance data retrieved by its cell A1, A2 and A3, respectively, to the network element which generated the further request messages R1, R2 and R3, i.e. the network element N0.

The reception of such performance data at the network element N0 induces the cell B0 to switch from the wait state to the execution state (step 43), wherein it is run e.g. as a thread or a separated process.

During execution, the cell B0 preferably collects the performance data provided by the network elements N1, N2 and N3 and the performance data locally retrieved by the cell A0 (step 44). During step 44, the cell B0 preferably synthesizes the collected performance data thus eliminating possible redundancies and arranges the synthesized performance data in a data structure, such as a table.

Thereafter, the cell B0 switches into the inactive state, while the cell C0 switches from the wait state to the execution state (step 45), wherein it is run e.g. as a thread or as a separate process.

During its execution, the cell C0 preferably transmits to the management terminal MT the data structure output by the cell B0, and gives to the management terminal MT the instruction to display such a data structure on its display (step 46). Then, the management terminal MT displays the data structure (step 47).

If the cell C0 does not receive from the management terminal MT any further request message before expiration of its lifetime tmax, the cell C0 preferably switches from its execution state to its inactive state (step 48).

Accordingly, advantageously, the cells stored in the cell databases of the various network elements are not active during the whole operation period of the network elements but, on the contrary, each cell is activated and executed only when a request for a management operation whose fulfillment requires its execution is detected within the telecommunication network.

Indeed, by referring for instance to the network element N0, although the cells A, B and C are stored in the cell database C-DB0, they are advantageously inactive until the network element N0 receives the request message R0, which contains a performance monitoring request whose fulfillment requires activation of the cells A, B and C. Therefore, until reception of the request message R0, the cells A, B and C are only stored in the cell database C-DB0, but they do not occupy any computational resource (i.e. memory and CPU) of the network element N0.

Further, advantageously, after activation, the cells A, B and C (i.e. their activated copies A0, B0 and C0) switch to their inactive state as soon as they complete their function (i.e. upon expiration of their lifetime tmax), without waiting for completion of the whole management operation. Therefore, advantageously, the computation resources of the network element N0 allocated to the cells A, B and C (i.e. their activated copies A0, B0 and C0) are gradually released, as soon as each cell has completed its own function.

The above consideration referred to the network element N0 also apply to the network elements N 1, N2 and N3.

Therefore, advantageously, the usage of the computational resources of each network element is optimized by dynamically allocating such resources to the execution of the various management operations according to the management operation request actually received at the network element, and by gradually releasing such resources as soon as each cell responsible of performing a part of the requested management operation has completed its function.

Further, advantageously, the time required for performing a management operation is reduced. Indeed, for instance, performance monitoring of a certain number of network elements is advantageously performed by locally retrieving the performance data substantially at the same time at the various concerned network elements (except for the above mentioned delay due to propagation of the request for the "supervisor" network element to the other concerned network elements). This mechanism is much shorter than the known one, according to which performance data are sequentially retrieved by one network element at a time.

Although by referring to the flow charts of Figures 3 and 4 it has been described that the cells A1, A2 and A3 are locally activated and run at a respective network element N1, N2 and N3, according to other embodiments not shown in the drawings, at least one of the cells A1, A2 and A3 may be activated and executed by the "supervisor" network element N0.

For instance, in a first situation, it is assumed that the cell database C-DB1 of the network element N1 does not store the cell A. In this case, preferably, when the network element N1 receives the further request message R1, it preferably replies to the network element N0 with an error message, indicating that the network element N1 is not capable of fulfilling the request received from the network element N0. In this situation, preferably, the cell activation module CAM0 of the network element N0 creates a further copy A1 of the cell A. Then, besides executing the cell A0, the network element N0 preferably executes also the cell A1, which retrieves the performance data relative to the Ethernet ports of the network element N1 from the local database L-DB1 (e.g. by means of a web service mechanism).

In a second situation, for instance, it is assumed that, contrary to what stated in the above description, the structure of the network element N1 is not equal to the structure of the network element N0 shown in Figure 2, but it is of a known type (i.e. it is only provided with an agent capable to interact with a manager of an NMS). Also in this case, preferably, during step 32 the cell activation module CAM0 of the network element N0 creates a further copy A1 of the cell A. Then, besides executing the cell A0, the network element N0 preferably executes also the cell A1, which (e.g. by means of the known agent-manager mechanism) retrieves the performance data relative to the Ethernet ports of the network element N1 from the local database L-DB1.

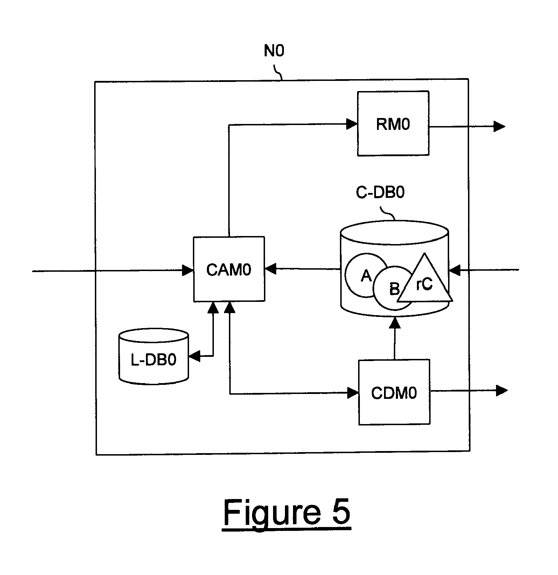

Figure 5 shows the structure of the network element N0, according to a second embodiment of the present invention.

A comparison of Figure 2 and Figure 5 shows that the network element N0 according to the second embodiment differs from the network element N0 according to the first embodiment in that it further comprises a cell detection module CDM0, which is connected both to the cell database C-DB0 and to the cell activation module CAM0.

Preferably, the cell detection module CDM0 is suitable for detecting in the cell databases of the other network elements of the telecommunication network TN possible cells which are stored therein, but which are not stored in the cell database C-DB0.

Preferably, the cell detection module CDM0 performs the detection operation in a substantially continuous manner (i.e. it is always active). This advantageously allows the module CDM0 to promptly detect the presence of any new cell, as soon as it is available in the database of any other network element.

For instance, it is assumed that the cell database C-DB0 stores the cells A and B, but not the cell C, as shown in Figure 5. It is further assumed that also the cell databases of the other network elements do not store such a cell C. However, at a certain time, the cell C is loaded, for instance, in the cell database C-DB2 of the network element N2.

In this situation, preferably, the cell detection module CDMO, which looks for possible cells not yet stored in the cell database C-DB0, detects the cell C in the cell database C-DB2, generates a cell reference rC to the cell C and loads the cell reference rC in the cell database C-DB0. Preferably, the cell reference rC comprises information which, when needed, allow the cell activation module CAM0 to retrieve the cell C and to create a copy C0 of such a cell to be activated at the network element N0. For instance, the reference rC may be a pointer indicating the network element N2 and the position at which the cell C is stored in the cell database C-DB2.

Therefore, advantageously, if all the network elements of the telecommunication network TN are provided with a respective cell detection module, all the network elements may be informed of the availability of any cell stored in the cell database of any other network element. Accordingly, if a network element receives (e.g. from the management terminal or from another network element) a request which it can not fulfill since its cell database does not store all the cells required for fulfilling the request, it may in any case retrieve the missing cell(s) from another cell database by means of the cell reference(s) generated by the cell detection module. In other words, even if a network element is not capable of (i.e. it is not equipped with all the cells suitable for) fulfilling a request for a given management operation, it may advantageously "adapt itself' to the request, by retrieving from other network elements the missing cells.

Therefore, advantageously, even if the network element is not equipped since its first configuration with all the cells required to fulfill all the requests which may be received at the network element during its operation period, the network element may adapt itself and become suitable to fulfill any possible request, since it can retrieve possible missing cells from the other network elements.

This also advantageously allows to implement in a telecommunication network new management services which were not planned at the moment of the first configuration of the telecommunication network.

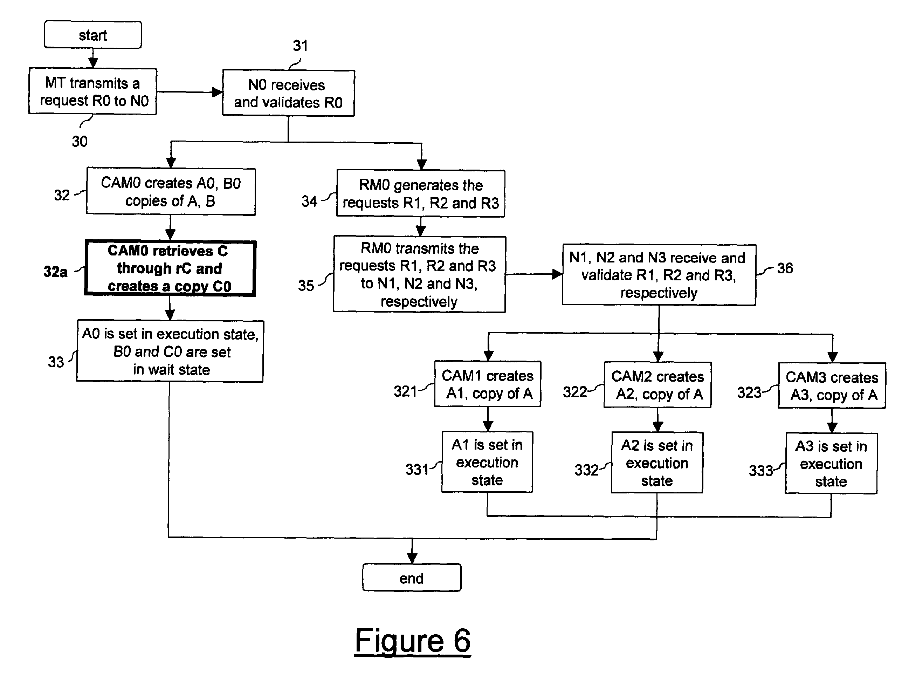

The operation of the network element N0 of Figure 5 is schematically shown in the flow chart of Figure 6. The comparison of the flow charts of Figure 6 and Figure 3 shows that, when the network element N0 performs the step 31 of receiving and validating the request message R0, thus determining that it has to activate the cells A, B and C, during step 32 the cell activation module CAM0 retrieves from the cell database C-DB0 only the cells A and B, and it creates their copies copy A0 and B0. Then, since it does not find the cell C in the cell database C-DB0, the cell activation module CAM0 preferably performs an additional step 32a, wherein it retrieves the cell C at the cell database C-DB2 of the network element N2 by means of the cell reference rC stored in the cell database C-DB0, and then it creates a copy C0 to be executed at the network element N0.

Therefore, although not configured to fulfill a performance monitoring request coming from the management terminal MT (since the cell C is locally missing), upon reception of the request message R0 from the management terminal MT the network element N0 is capable of retrieving the missing cell C, thereby adapting its configuration for fulfilling the performance monitoring request.

## Claims

1. A method for managing a telecommunication network (TN) comprising a plurality of network elements (N0, N1, N2, N3) and cooperating with a management terminal (MT), said method comprising the following steps, which are performed by a first network element (N0) of said plurality of network elements (N0, N1, N2, N3):
a) storing a cell (A, B, C) comprising a software code portion suitable for performing, when executed by any of said plurality of network elements (N0, N1, N2, N3), at least part of a management operation;
b) receiving a request message (R0) comprising a request of performing said management operation;
c) determining whether to activate said cell (A, B, C) according to information comprised in said request message (R0);
d) in the affirmative, activating said cell (A, B, C), thus executing said part of said management operation; and
e) upon expiration of a lifetime tmax of said cell (A, B, C), deactivating said cell (A, B, C).

2. The method according to claim 1, further comprising, before said step a), a step of defining said lifetime tmax as one of:
- a maximum time between an activation time of said cell (A, B, C) and a deactivation time of said cell (A, B, C); and
- an instant wherein an event suitable for triggering the deactivation of said cell (A, B, C) occurs.

3. The method according to claim 1 or 2, further comprising, before said step a), a step of connecting said plurality of network elements (N0, N1, N2, N3) by means of a calculation grid.

4. The method according to any of the preceding claims, wherein said step a) further comprises:
- detecting the availability of a further cell (C) at a second network element (N2) of said plurality of network elements (N0, N1, N2, N3), said further cell (C) comprising a further software code portion suitable for performing, when executed by any of said plurality of network elements (N0, N1, N2, N3), at least a further part of said management operation; and
- storing at said first network element (N0) a cell reference (rC) allowing said first network element (N0) to retrieve said further cell (C) from said second network element (N2).

5. The method according to any of the preceding claims, further comprising the following steps, which are performed after said step b):
- processing said request message (R0) for generating at least one further request message (R1, R2, R3); and
- transmitting said at least one further request message (R1, R2, E3) to a further network element (N1, N2, N3) of said plurality of network elements (N1, N2, N3).

6. The method according to any of the preceding claims, wherein said step d) comprises:
- creating a copy (A0, B0, C0) of said cell (A, B, C); and
- setting said copy (A0, B0, C0) in an initial state S0, said initial state S0 being selected between an execution state, wherein said copy (A0, B0, C0) is active and is executed by computational resources of said first network element (N0), and a wait state, wherein said copy (A0, B0, C0) is active and waiting to enter in said execution state.

7. The method according to any of the preceding claims, wherein said step
e) comprises a step of keeping said cell (A, B, C) inactive until said first network element (N0) is switched off.

8. A network element (N0, N1, N2, N3) for a telecommunication network (TN), said telecommunication network (TN) cooperating with a management terminal (MT), said network element (N0, N1, N2, N3) being configured to perform the method according to any of the preceding claims.

9. A telecommunication network (TN) suitable for cooperating with a management terminal (MT), said telecommunication network (TN) comprising at least one network element (N0, N1, N2, N3) according to claim 8.

10. Computer program comprising a software code portion, said computer program being suitable for being stored at a network element (N0, N1, N2, N3) of a telecommunication network (TN), said telecommunication network (TN) being configured to cooperate with a management terminal (MT), said computer program being suitable for, when run at said network element (N0, N1, N2, N3), executing the method according to any of claims 1 to 7.

## Amended claims

### Amended claims in accordance with Rule 137(2) EPC.

**1.** said further cell (C) comprising a further software code portion suitable for performing, when executed by any of said plurality of network elements (N0, N1, N2, N3), at least a further part of said management operation; and
- storing at said first network element (N0) a cell reference (rC) allowing said first network element (N0) to retrieve said further cell (C) from said second network element (N2).

**5.** The method according to any of the preceding claims, further comprising the following steps, which are performed after said step b):
- processing said request message (R0) for generating at least one further request message (R1, R2, R3); and
- transmitting said at least one further request message (R1, R2, E3) to a further network element (N1, N2, N3) of said plurality of network elements (N1, N2, N3).

**6.** The method according to any of the preceding claims, wherein said step d) comprises:
- creating a copy (A0, B0, C0) of said cell (A, B, C); and
- setting said copy (A0, B0, C0) in an initial state S0, said initial state S0 being selected between an execution state, wherein said copy (A0, B0, C0) is active and is executed by computational resources of said first network element (N0), and a wait state, wherein said copy (A0, B0, C0) is active and waiting to enter in said execution state.

**7.** The method according to any of the preceding claims, wherein said step e) comprises, after the activation of said cell (A, B, C), a step of keeping said cell (A, B, C) inactive until said first network element (N0) is switched off.

**8.** A network element (N0, N1, N2, N3) for a telecommunication network (TN), said telecommunication network (TN) cooperating with a management terminal (MT), said network element (N0, N1, N2, N3) being configured to perform the method according to any of the preceding claims.
